# FASCICULE DE BREVET EUROPEEN

(11) **EP 2 895 438 B1**
(45) Date de publication et mention de la délivrance du brevet: **20.08.2025**
(21) Numéro de dépôt: 13763071.1
(22) Date de dépôt: 17.09.2013
(51) Int. Cl.: C04B 28/02, C04B 28/14, C04B 28/16, C04B 40/00

(54) **NOUVELLE CHAPE À BASE DE LIANT HYDRAULIQUE AVEC UNE CONDUCTIVITÉ THERMIQUE AMÉLIORÉE**
NEUARTIGER HYDRAULISCHER BELAG AUF BASIS EINES BINDEMITTELS MIT VERBESSERTER WÄRMELEITFÄHIGKEIT
NOVEL HYDRAULIC-BINDER-BASED SCREED HAVING IMPROVED THERMAL CONDUCTIVITY

(30) Priorité: 17.09.2012 FR 1258688
(43) Date de publication de la demande: 22.07.2015
(73) Titulaire: Anhydritec, 84800 L'Isle-sur-la-Sorgue (FR)
(72) Inventeur: AUGUSTIN, Francis, F-84800 Isle-sur-la-Sorgue (FR); BOCQUET, Anne-Claire, F-84130 Le Pontet (FR); LAVIEILLE, Aurore, F-84800 Isle-sur-la-Sorgue (FR); VASLIN, Benoit, F-Pujaut 30131 (FR)
(74) Mandataire: August Debouzy
(86) Numéro de dépôt international: PCT/EP2013/069316
(87) Numéro de publication internationale: WO 2014/041208

(56) Documents cités:
- EP-A1- 2 476 658
- DE-A1- 102011 000 998
- DE-A1- 4 226 277
- FR-A1- 2 659 078
- FR-A1- 2 943 339
- JP-A- H0 655 529
- US-A- 4 961 790
- US-A1- 2005 020 736

## Description

### DOMAINE DE L'INVENTION

La présente invention a pour objet une nouvelle chape à base de liant hydraulique notamment sulfate de calcium avec une conductivité thermique améliorée.

### ARRIERE-PLAN TECHNIQUE

La chape anhydrite ou chape sulfate de calcium est bien connue de l'homme du métier. C'est un mortier fluide à base d'un liant base sulfate de calcium, fibré ou non, généralement préparé en centrale de production (centrales à béton le plus souvent) pour la réalisation de chapes autonivelantes, et livré sur chantier en camion malaxeur ou livré directement sur chantier par un système de distribution type transmix. Les matériaux pour chape anhydrite sont le sujet des normes EN 13454-1 et EN 13813.

On connaît aussi les chapes ciment, dans lesquelles le liant hydraulique est un ciment et non plus sulfate de calcium. Ces chapes ciment sont le sujet des normes EN 197-1 et EN 13813

La chape ciment ou anhydrite comprend des additifs qui peuvent avoir comme effet négatif d'entrainer de l'air de manière irrégulière et très variable pouvant aller jusqu'à 10% d'air entrainé.

Les chapes peuvent aussi contenir des agents anti-mousses.

Par exemple, la demande DE2739189 décrit une chape comprenant un anti-mousse qui est un tributylphosphate. La demande WO-A- 2006/072273 décrit encore des compositions pour chape fluide qui comprennent divers additifs parmi lesquels des agents anti-mousse. De même, les demandes DE4404182 et EP323577 décrivent encore des compositions typiques de chapes fluides, qui contiennent un agent anti-mousse. Le rôle des agents anti-mousse n'est pas décrit plus avant dans ces documents, autre bien entendu que son rôle classique.

Les chapes fluides à base de sulfate de calcium sont utilisées pour la réalisation par exemple de planchers chauffants. Dans cette utilisation, les compositions doivent présenter, à l'état sec, une conductivité thermique élevée (alors qu'en général dans le domaine du bâtiment on recherche plutôt une conductivité faible) pour permettre un transfert de chaleur efficace des tuyaux caloporteurs qui sont noyés dans la masse du plancher.

A cette fin, on a déjà proposé des additifs, notamment des additifs du type graphite, comme par exemple dans les demandes DE10049230 et EP2476658. Ces additifs sont cependant coûteux et doivent être utilisés à des dosages élevés pour être efficaces

On connaît encore des planchers chauffants à base de chape ciment qui présentent les mêmes problématiques de conductivité thermique. De façon classique, on recherche dans le domaine des chapes ciment des conductivités thermiques les plus basses possibles de sorte à conférer un pouvoir isolant. On peut se référer par exemple aux documents FR2956397 et FR2963000 par exemple.

DE102011000998 décrit l'utilisation d'un ester phosphorique comme additif dans un liant inorganique. DE4226277 décrit une composition de mortier comprenant notamment des agents antimousses.

Il existe donc un réel besoin de mettre un point une chape qui présente une conductivité thermique améliorée tout en évitant les problèmes associés avec l'utilisation d'additifs du type graphite.

### RESUME DE L'INVENTION

L'invention a donc pour objet l'utilisation d'un agent anti-mousse pour augmenter la conductivité thermique des chapes contenant un liant hydraulique, de préférence à base de sulfate de calcium.

Selon l'invention, un agent fluidifiant/dispersant/plastifiant/superplastifiant est utilisé en combinaison avec ledit agent anti-mousse.

Ledit agent anti-mousse et fluidifiant/dispersant/plastifiant/superplastifiant l'agent sont ajoutés par exemple soit dans le mortier, de préférence dans un sachet hydrosoluble, soit avec une partie de l'eau, soit dans le liant, soit dans plusieurs vecteurs.

L'invention a encore pour objet un additif pour mortier de chape comprenant, dans un sachet hydrosoluble :
- un agent anti-mousse qui est un polysiloxane/alkoxylate ; et
- un agent fluidifiant/dispersant/plastifiant/superplastifiant qui est une polymélamine sulfonée ou un polycarboxylate polyether, dans lequel le ratio pondéral agent anti-mousse : agent superplastifiant est compris entre 0,005 et 200.

L'invention a encore pour objet un plancher chauffant comprenant une chape ayant une conductivité thermique d'au moins 2,0, de préférence au moins 2.2, avantageusement au moins 2.5 W/m.K, obtenue par le durcissement d'une pâte pour chape comprenant :
- une composition pour mortier de chape comprenant :
   un liant hydraulique à base de sulfate de calcium, plus préférentiellement anhydrite ;
   des granulats ;
   un agent anti-mousse, en une quantité comprise entre 0,01% et 2%, de préférence 0,01 et 0,5%, calculé par rapport au poids du liant ;
   un agent fluidifiant/dispersant/plastifiant/super-plastifiant, exprimé en extrait sec, est présent en une quantité comprise entre 0.01 et 2%, de préférence entre 0.02 et 1%, par rapport au poids de liant ;
- de l'eau, en quantité telle que ratio eau/liant est compris entre 0,27 et 0,70, de préférence entre 0,35 et 0,55, avantageusement entre 0,35 et 0,45,
dans lequel l'agent anti-mousse est choisi parmi les antimousses à base de silicone, alcools gras, esters, de polypropylène glycol, copolymères polyéthylène glycol et polypropylène glycol, alkylpolyacrylate, et dans lequel ledit l'agent fluidifiant/dispersant/ plastifiant/superplastifiant est choisi dans le groupe des composés obtenus par condensation de formaldéhyde et de naphtalène sulfoné ou par condensation de formaldéhyde et de mélamines sulfonées, ou à base de copolymère acrylique.

Selon un mode de réalisation, l'agent anti-mousse est choisi parmi les antimousses à base de silicone, d'alcools gras, esters, de polypropylène glycol.

Selon l'invention, la composition pour mortier de chape comprend en outre un agent fluidifiant/dispersant/plastifiant/superplastifiant.

L'agent fluidifiant/dispersant/plastifiant/superplastifiant (exprimé en extrait sec) est présent en une quantité comprise entre 0.01 et 2%, de préférence entre 0.02 et 1%, par rapport au poids de liant
Selon un mode de réalisation, le ratio pondéral agent anti- mousse : agent fluidifiant/dispersant/plastifiant/ superplastifiant est compris entre 0.005 et 200, de préférence 0.05 à 20.

Selon un mode de réalisation, les granulats sont des granulats de nature calcaire ou silico calcaire.

Selon un mode de réalisation, la composition pour mortier de chape comprend en outre un additif choisi parmi les accélérateurs ou retardateursde prise, agents épaississants, agents de viscosité et/ou rétenteurs d'eau, entraineurs d'air, agents anti pellicule, traceurs, agents hydrophobants, agents colorants et leurs mélanges, en particulier les agents viscosifiants et/ou les épaississants.

Selon un mode de réalisation, la pâte présente un étalement d'au moins 22cm, de préférence au moins 24cm, avantageusement au moins 25cm.

Pour la fabrication du plancher chauffant, ledit agent anti-mousse et l'agent fluidifiant/dispersant/plastifiant/superplastifiant sont ajoutés par exemple soit dans le mortier, de préférence dans un sachet hydrosoluble, soit avec une partie de l'eau, soit dans le liant, soit dans plusieurs vecteurs.

La présente invention permet de surmonter les inconvénients de l'état de la technique. Elle fournit plus particulièrement une chape dans laquelle l'agent anti-mousse et éventuellement un agent plastifiant en excès, est utilisé pour augmenter la conductivité thermique. La chape ainsi préparée conserve ses autres qualités.

### DESCRIPTION DE MODES DE REALISATION DE L'INVENTION

L'invention est maintenant décrite plus en détail et de façon non limitative dans la description qui suit.

Le liant hydraulique utilisé dans l'invention est tout liant hydraulique connu et classique. Par l'expression « liant hydraulique », on entend selon la présente invention tout composé ayant la propriété de s'hydrater en présence d'eau et dont l'hydratation permet d'obtenir un solide ayant des caractéristiques mécaniques. Le liant est notamment du sulfate de calcium comme il sera décrit plus en détails infra.

### Chape sulfate de calcium.

La chape sulfate de calcium est aussi désignée sous le terme de chape anhydrite. Une telle chape comprend un liant qui est du sulfate de calcium, de préférence anhydrite, ou un liant comprenant au moins 50 % en poids de sulfate de calcium, de préférence au moins 85% voire sensiblement 100%. Des fillers de différentes natures (calcaires, siliceux, cendres volantes, fumées de silice peuvent être utilisés en complément du sulfate de calcium ;

Ce sulfate de calcium peut être du semi-hydrate (forme beta ou alpha, de source naturelle ou de synthèse) ou anhydre, par exemple anhydrite Il ou anhydrite III, obtenue à partir de sources de synthèse (fluoroanhydrite par exemple) ou de carrières naturelles ou par calcination de gypse naturel ou de synthèse (par exemple du gypse de desulfuration FGD). On peut par exemple utiliser un procédé de calcination classique ou un procédé Rocal^{™}. On peut utiliser des mélanges de différentes sources de sulfate de calcium.

La chape selon l'invention remplit généralement les exigences des normes européennes EN 13454-1 (liant) et EN 13813 (mortier) relatives aux liants et mortiers à base de sulfate de calcium pour chapes fluides.

La quantité de liant notamment sulfate de calcium dans la chape est classique, typiquement de l'ordre de 650kg/m3. Le liant est présent en une quantité classique, notamment pour atteindre et conserver les qualités minimales spécifiées dans les normes ci-dessus.

Les granulats qui sont utilisés dans la formulation selon l'invention sont des granulats classiques conformes à la norme EN 12620 (sables pour béton). En pratique, le Dmax est inférieur à 8mm, et en général le sable présente des tailles de particules sensiblement entre 0 et 4mm (qui sont dénommés généralement sables 0-4). Le sable peut être de différentes origines, alluvionnaires lavés (roulés, semi-concassés ou concassés), sables d'origine marine, sables concassés calcaires (sec ou lavés), sables d'origine magmatique (porphyre, granite), granulats de recyclage issus du concassage de bétons ou d'autres matériaux de construction

La problématique de la conductivité thermique améliorée est particulièrement critique avec des granulats qui sont de nature calcaire ou silico calcaire, même si cette problématique peut également se présenter ponctuellement avec des granulats d'autres natures. Pour ces sables, il est souvent difficile d'atteindre les performances de conductivité thermique requises.

La composition selon l'invention comprend un agent anti-mousse. La quantité de cet agent est comprise typiquement entre 0,01% et 2%, de préférence 0,01% et 0,5%, calculé par rapport en extrait sec au poids du liant. Par exemple, la quantité ajoutée peut être d'environ 0,05%.

Le type d'agent anti-mousse est varié. Il peut notamment être à base de silicone, d'alcools gras, esters, de polypropylène glycol. Notamment l'agent anti-mousse peut être choisi dans les classes suivantes.
- Anti-mousse à base d'huile, qui a une huile comme véhicule. Cette huile peut être minérale, végétale (sauf silicone). L'anti-mousse comprend aussi une cire et/ou une silice hydrophobe. Des cires sont par exemples éthylène bis stéaramide (EBS), cires paraffiniques, cires ester et les cires à base d'alcools gras. Des tensio-actifs peuvent aussi être présents.
- Anti-mousse en poudre. Ces agents correspondent à ces agents à base d'huile mais sur un support particulaire tel que de la silice.
- Anti-mousse sur base aqueuse. Ce sont en général des huiles ou des cires dispersées dans une base aqueuse. Les huiles sont des huiles blanches ou des huiles végétales and les cires sont des alcools gras, des acides gras, des esters ou des savons de ceux-ci.
- Anti-mousse silicone. Ces anti-mousses ont un silicone comme agent actif. On peut en disposer sur base huile ou sur base aqueuse. Une silice hydrophobe peut être dispersée dans le milieu silicone. Des émulsifiants peuvent être utilisés. Des silicones modifiés comme des silicones glycols ou des fluorosilicones peuvent aussi être utilisés.
- Anti-mousse du type glycol. Ces agents comprennent des copolymères polyéthylène glycol et polypropylène glycol. Ils sont disponibles sur base huileuse ou aqueuse ou émulsions.
- Anti-mousse du type alkylpolyacrylate. Ces agents sont généralement disponibles dans un solvant pétrolier.

La quantité d'agent anti-mousse est aussi fonction de la nature de l'agent, de la formulation du liant pour mortier et aussi de la nature des granulats notamment. Il est possible d'ajuster la quantité d'agent anti-mousse ajouté pour obtenir une valeur de conductivité thermique minimale requise. en fonction de la formulation du liant. De même, la quantité d'agent anti- mousse ajouté peut être ajustée pour obtenir une valeur minimale de conductivité indépendamment de la qualité des granulats utilisés (de nature siliceuse ou calcaire).

La composition selon l'invention comprend un agent fluidifiant/dispersant/plastifiant/superplastifiant (SP). Ces termes sont utilisés de façon interchangeable pour désigner un additif permettant, par son addition à une composition aqueuse de sulfate de calcium, de réduire la demande en eau et de maintenir la fluidité/rhéologie de la pâte. En diminuant la demande en eau, on obtient une augmentation de la conductivité thermique. En augmentant la quantité d'un tel agent, en effectuant de fait un surdosage, on peut donc encore influer sur la conductivité thermique. C'est un autre aspect de l'invention. Par exemple, l'abaissement du ratio eau/liant d'une valeur de 0,05 (par exemple de 0,45 à 0,40) conduit à une augmentation de la conductivité thermique d'environ 15%.

La quantité de fluidifiant est très dépendante de la nature du fluidifiant et de sa dilution ; on donnera néanmoins des dosages à 100% d'extrait sec La quantité de SP ajoutée est généralement comprise entre 0.01% et 2%, de préférence entre 0.02% et 1%. Lorsque le SP est ajouté à titre de surdosage, savoir en plus du SP qui est déjà contenu dans le liant dit préfluidifié, la quantité ajoutée est généralement comprise entre 0.01% et 1%, de préférence entre 0.01 % et 0.5%.

Par exemple on peut utiliser des dispersants obtenus par condensation de formaldéhyde et de naphtalène sulfoné ou par condensation de formaldéhyde et de mélamines sulfonées. Des dispersants à base de copolymère acrylique peuvent aussi être utilisés, de préférence ce sont des polymères comprenant une chaîne avec une fonction polycarboxylique, éventuellement salifiée, à laquelle un autre groupe (par exemple du type polycarboxylate ou polyoxyéthylène) est attaché.

L'agent anti-mousse est généralement ajouté sous forme de poudre, mais un ajout sous forme liquide est aussi possible. L'ajout sous forme liquide permet de façon générale un dosage automatisé-des additifs. Il en est de même pour l'agent fluidifiant/dispersant/plastifiant/superplastifiant.

On peut encore ajouter des éléments du type fibre, comme des fibres polymères ou des fibres de verre.

### Additifs

La composition de mortier comprend des additifs classiques dans le domaine des chapes à base de sulfate de calcium.
On peut citer par exemple les accélérateurs ou retardateurs de prise, agents épaississants, agents de viscosité et/ou rétenteurs d'eau, agents anti pellicule, traceurs, agents hydrophobants, etc.

Un ou plusieurs retardateurs de prise peuvent être utilisés. De tels retardateurs sont par exemple les acides carboxyliques tels que l'acide citrique, les sucres et leurs dérivés, le sel de calcium de polyoxymethylene amino-acide.

Un ou plusieurs accélérateurs de prise peuvent être utilisés. De tels accélérateurs sont le sulfate de potassium, mais aussi le sulfate de sodium, sulfate de lithium, sulfate d'ammonium, la chaux sous diverses formes comme la chaux vive et la chaux éteinte, le ciment portland ou alumineux, un hydrate alpha ou béta ou du gypse finement broyé (BMA Ball Mill Accelerator gypse broyé avec de l'amidon).

Les retardateurs et accélérateurs sont utilisés pour obtenir un temps de prise (entre le début et la fin de la prise) qui est compatible avec l'application souhaitée.

Des agents viscosifiants et des épaississants peuvent aussi être utilisés, notamment pour éviter la ségrégation et/ou le ressuage. Par exemple on peut utiliser des biopolymères (tels que les gommes) notamment obtenus par fermentation, la silice précipitée ou les dérivés de cellulose.
Il est possible d'ajouter un colorant (pigment) dans le mortier pour chape, notamment au niveau de l'additif dans son sachet. Le colorant sera de préférence par exemple rouge, de sorte à indiquer que l'utilisation de la chape vise les planchers chauffants.

La quantité d'eau est ajustée en vue d'obtenir la consistance et les résistances mécaniques requises pour l'application du mortier sur chantier.

La quantité d'eau est généralement susceptible d'être exprimée par rapport au liant, et le ratio eau/liant est généralement compris entre 0,27 et 0,70, de préférence entre 0,35 et 0,55, avantageusement entre 0,35 et 0,45.

De façon classique, le liant qui est livré sur les chantiers comprend aussi un (super)plastifiant SP. Le liant est dit préfluidifié. La quantité de SP dépend des caractéristiques physico chimiques des matériaux et de la rhéologie recherchée. Dans l'invention, selon un mode de réalisation, un SP sera fourni en excès, de sorte à pouvoir encore réduire le ratio eau/liant.

L'invention est donc l'utilisation d'un additif de conductivité qui est un agent anti-mousse avec un SP en association, qui est livré en complément, généralement sous forme de sachets (hydrosolubles), pour mélange au liant, ce liant pouvant comprendre généralement aussi déjà un (super)plastifiant. Selon un mode de réalisation, le ratio pondéral agent anti- mousse : agent fluidifiant/dispersant/plastifiant/superplastifiant est compris entre 0.005 et 200 de préférence 0.05 à 20. Lorsque le liant est préfluidifié, ce ratio est alors compris entre 0.01 et 200, de préférence 0.05 à 20. Ce ratio est très dépendant de la nature des additifs et notamment de la nature du plastifiant.

L'invention peut être mise en œuvre de différentes façons. On peut ajouter l'additif de conductivité (notamment sous forme d'un sachet hydrosoluble) dans la toupie (au niveau de la centrale à béton). Le camion peut aussi comporter une mini-centrale à béton avec remorques de produits secs et dans ce cas la composition selon l'invention est fabriquée à commande. Il est aussi possible de livrer directement sur chantiers pour gâchage sur place. L'additif de conductivité peut aussi être ajouté dans une partie de l'eau. On peut aussi ajouter l'additif directement en usine dans le liant.

L'additif de conductivité est généralement ajouté sous forme de poudre, notamment dans un sachet hydrosoluble, mais un ajout sous forme liquide est aussi possible. L'ajout sous forme liquide permet de façon générale un dosage automatisé-des additifs.

Les valeurs d'étalement des compositions selon l'invention sont classiques. Elles présentent notamment un étalement d'au moins 22cm, de préférence au moins 24cm, avantageusement au moins 25cm.

La conductivité thermique de la chape obtenue avec la composition de mortier selon l'invention est augmentée, pour atteindre des valeurs d'au moins 2, de préférence au moins 2.2, avantageusement au moins 2.5 W/m.K.

Les valeurs des différentes propriétés sont mesurées comme suit.
- Etalement. L'étalement est mesuré comme suit. On dispose un étalomètre en matière plastique La Chape Liquide humidifié à l'éponge sur une surface parfaitement stable et horizontale. Immédiatement après le gâchage, on remplit soigneusement à ras le moule tronconique en acier (diamètre intérieur = 70mm, diamètre extérieur = 110mm, hauteur = 60 mm, norme EN459-2, préalablement humidifié) centré sur la plaque en moins de 25 secondes. On retire lentement le moule après 25 secondes et on lit la valeur d'étalement à 30 secondes à l'aide d'une règle graduée par la moyenne des deux diamètres perpendiculaires représentatifs.
- Conductivité thermique
   La conductivité thermique est mesurée sur éprouvettes de dimensions 14x16 x 4cm selon la norme NF **EN** 993-15

Les exemples suivants illustrent l'invention sans la limiter.

### EXEMPLES

On utilise les produits suivants

| | |
|---|---|
| - Liant : | liant CAp ou CA (références commerciales) |
| - Granulats : | Sable normalisé CEN ou Sable 0/4 Perrin (Dmax 4mm) |
| - Anti-mousse | polysiloxane/alkoxylate (defoamer D9010F BASF). |
| - SP1 | [polymélamine sulfonée, Melment F10 BASF ]. |
| - SP2 | Polycarboxylate polyether melflux AP101F BASF |
| - SP^{®} | adjuvant anti pellicule (La Chape Liquide) |

Les formulations suivantes sont fabriquées, et on a testé les caractéristiques de ces formulations de chape. Les résultats sont consignés dans les tableaux correspondant aux exemples ci-dessous.

### Exemple 1.

| | | Mortier Classique | Mortier selon l'invention |
|---|---|---|---|
| Liant CAp | kg/m³ | 650 | 650 |
| Adjuvant SP^{®} | Kg/m3 | 1.5 | 1.5 |
| Eau | kg/m³ | 290 | 290 |
| Sable CEN | kg/m³ | 1260 | 1260 |
| Anti-mousse | %/liant | 0 | 0,05 |
| Etalement | cm | 26 | 26 |
| E/L | | 0.45 | 0.45 |
| Conductivité thermique | W/m.K | 2.35 | 2.92 |

L'ajout de 0,05% d'agent anti-mousse permet un gain au niveau de la conductivité d'environ 25% sur un liant contenant de l'air entrainé (3%).

### Exemple 2

| | | Mortier Classique | Mortier selon l'invention |
|---|---|---|---|
| Liant CA* | kg/m³ | 650 | 650 |
| Eau | kg/m³ | 310 | 310 |
| Sable 0/4 Perrin | kg/m³ | 1220 | 1220 |
| Anti-mousse | %/liant | 0 | 0,05 |
| E/L | | 0.48 | 0.48 |
| SP1 | %/liant | 0 | 0.20 |
| Etalement | cm | 26 | 26 |
| Conductivité thermique | W/m.K | 1.88 | 2.03 |

| | | | |
|---|---|---|---|
| * non préfluidifié | | | |

Exemple 3. effet de l'ajout du SP (et réduction d'eau) et antimousse

| | | Mortier Classique | Mortier selon l'invention |
|---|---|---|---|
| Liant CAp | kg/m³ | 650 | 650 |
| Eau | kg/m³ | 310 | 270 |
| Sable 0/4 Perrin | kg/m³ | 1220 | 1220 |
| Anti-mousse | %/liant | 0 | 0.05 |
| E/L | | 0.48 | 0.42 |
| SP1 | %l/liant | 0 | 0.20 |
| Etalement | cm | 26 | 26 |
| Conductivité thermique | W/m.K | 1.88 | 2.34 |

L'ajout d'antimousse et de SP permet une amélioration du lambda d'environ 25%.

### Exemple 4.

| | | Mortier Classique | Mortier selon l'invention |
|---|---|---|---|
| Liant CA* | kg/m³ | 650 | 650 |
| Eau | kg/m³ | 310 | 310 |
| Sable 0/4 Perrin | kg/m³ | 1220 | 1220 |
| E/L | | 0.48 | 0.48 |
| Anti-mousse | %/liant | 0 | 0,05 |
| SP2 | %/liant | 0.08 | 0.08 |
| Etalement | cm | 26 | 26 |
| Conductivité thermique | W/m.K | 2.01 | 2.17 |

| | | | |
|---|---|---|---|
| * non préfluidifié | | | |

## Revendications

1. Utilisation d'un agent anti-mousse et d'un agent fluidifiant/dispersant/plastifiant/superplastifiant en combinaison avec ledit agent anti-mousse pour augmenter la conductivité thermique des chapes contenant un liant hydraulique à base de sulfate de calcium,
dans laquelle l'agent anti-mousse est choisi parmi les antimousses à base de silicone, alcools gras, esters, polypropylène glycol, copolymères polyéthylène glycol et polypropylène glycol, alkylpolyacrylate, et dans laquelle ledit l'agent fluidifiant/dispersant/plastifiant/superplastifiant est choisi dans le groupe des composés obtenus par condensation de formaldéhyde et de naphtalène sulfoné ou par condensation de formaldéhyde et de mélamines sulfonées, ou à base de copolymère acrylique,
et dans laquelle l'agent anti-mousse est présent en une quantité comprise entre 0,01% et 2%, calculé par rapport au poids du liant et l'agent fluidifiant/dispersant/plastifiant/superplastifiant, exprimé en extrait sec, est présent en une quantité comprise entre 0,01 et 2% par rapport au poids de liant.

2. Utilisation selon la revendication 1 dans laquelle l'agent anti-mousse est choisi parmi les antimousses à base de silicone, d'alcools gras, esters, de polypropylène glycol.

3. Utilisation selon la revendication 1 ou 2, dans laquelle ledit polymère acrylique comprend une chaîne avec une fonction polycarboxylique, éventuellement salifiée, à laquelle un autre groupe, tel que du type polycarboxylate ou polyoxyéthylène, est attaché.

4. Utilisation selon l'une des revendications 1 à 3, dans laquelle ledit agent anti-mousse est un polysiloxane/alkoxylate et l'agent superplastifiant est une polymélamine sulfonée ou un polycarboxylate polyether.

5. Utilisation selon l'une des revendications 1 à 4, dans laquelle l'agent anti-mousse est présent en une quantité comprise entre 0,01 et 0,5%, calculé par rapport au poids du liant et/ou l'agent fluidifiant/dispersant/plastifiant/ superplastifiant (exprimé en extrait sec) est présent en une quantité comprise entre 0,02 et 1%, par rapport au poids de liant.

6. Utilisation selon l'une des revendications 1 à 5, dans laquelle lequel le ratio pondéral agent anti-mousse : agent fluidifiant/dispersant/plastifiant/superplastifiant est compris entre 0.005 et 200, de préférence 0.05 à 20.

7. Utilisation selon l'une des revendications 1 à 6, dans laquelle ledit agent anti-mousse et l'agent fluidifiant/dispersant/plastifiant/ superplastifiant sont ajoutés dans le mortier dans un sachet hydrosoluble.

8. Plancher chauffant comprenant une chape ayant une conductivité thermique d'au moins 2,0, de préférence au moins 2.2, avantageusement au moins 2.5 W/m.K, obtenue par le durcissement d'une pâte pour chape comprenant :
- une composition pour mortier de chape comprenant :
- un liant hydraulique à base de sulfate de calcium, préférentiellement anhydrite ;
- des granulats ;
- un agent anti-mousse, en une quantité comprise entre 0,01% et 2%, de préférence 0,01 et 0,5%, calculé par rapport au poids du liant ;
- agent fluidifiant/dispersant/plastifiant/super-plastifiant, exprimé en extrait sec, est présent en une quantité comprise entre 0.01 et 2%, de préférence entre 0.02 et 1%, par rapport au poids de liant ;
- de l'eau, en quantité telle que ratio eau/liant est compris entre 0.27 et 0.70, de préférence entre 0.35 et 0,55, avantageusement entre 0,35 et 0,45,
dans lequel l'agent anti-mousse est choisi parmi les antimousses à base de silicone, alcools gras, esters, de polypropylène glycol, copolymères polyéthylène glycol et polypropylène glycol, alkylpolyacrylate, et dans lequel ledit l'agent fluidifiant/dispersant/ plastifiant/superplastifiant est choisi dans le groupe des composés obtenus par condensation de formaldéhyde et de naphtalène sulfoné ou par condensation de formaldéhyde et de mélamines sulfonées, ou à base de copolymère acrylique.

9. Plancher chauffant selon la revendication8, dans lequel l'agent anti-mousse est choisi parmi les antimousses à base de silicone, d'alcools gras, esters, de polypropylène glycol.

10. Plancher chauffant selon la revendication 8 ou 9, dans lequel ledit polymère acrylique comprend une chaîne avec une fonction polycarboxylique, éventuellement salifiée, à laquelle un autre groupe, tel que du type polycarboxylate ou polyoxyéthylène, est attaché.

11. Plancher chauffant selon l'une des revendications 8 à 10, dans lequel ledit agent anti-mousse est un polysiloxane/alkoxylate et l'agent superplastifiant est une polymélamine sulfonée ou un polycarboxylate polyether.

12. Plancher chauffant selon l'une des revendications 8 à 11, dans lequel lequel le ratio pondéral agent anti-mousse : agent fluidifiant/dispersant/plastifiant/superplastifiant est compris entre 0.005 et 200, de préférence 0.05 à 20.

13. Plancher chauffant selon l'une des revendications 8 à 12, dans lequel la pâte présente un étalement d'au moins 22cm, de préférence au moins 24cm, avantageusement au moins 25cm.

14. Plancher chauffant selon l'une des revendications 8 à 13, dans lequel les granulats sont des granulats de nature calcaire ou silico calcaire.

15. Additif pour mortier de chape comprenant, dans un sachet hydrosoluble, un agent anti-mousse qui est un polysiloxane/alkoxylate et un agent superplastifiant qui est une polymélamine sulfonée ou un polycarboxylate polyether, dans lequel le ratio pondéral agent anti-mousse : agent superplastifiant est compris entre 0,005 et 200.

## Patentansprüche

1. Verwendung eines Antischaummittels und eines Fließ-/Dispergier- /Plastifizierungs-/Superplastifizierungsmittels in Kombination mit dem Antischaummittel zum Erhöhen der Wärmeleitfähigkeit von Estrichen, die ein hydraulisches Bindemittel auf Basis von Calciumsulfat enthalten,
wobei das Antischaummittel ausgewählt ist aus Entschäumern auf Basis von Silikon, Fettalkoholen, Estern, Polypropylenglykol, Polyethylenglykol- und Polypropylenglykol-Copolymeren, Alkylpolyacrylat, und wobei das Fließ-/Dispergier-/Plastifizierungs-/Superplastifizierungsmittel ausgewählt ist aus der Gruppe der Verbindungen, die durch Kondensation von Formaldehyd und sulfoniertem Naphthalin oder durch Kondensation von Formaldehyd und sulfonierten Melaminen erlangt werden, oder auf Basis von Acrylcopolymeren,
und wobei das Antischaummittel in einer Menge vorhanden ist, die zwischen 0,01 % und 2 % liegt, berechnet in Bezug auf das Gewicht des Bindemittels, und das Fließ-/Dispergier-/Plastifizierungs-/Superplastifizierungsmittel, ausgedrückt als Trockenextrakt, in einer in einer Menge vorhanden ist, die zwischen 0,01 und 2 % liegt, bezogen auf das Gewicht des Bindemittels.

2. Verwendung nach Anspruch 1 wobei das Antischaummittel ausgewählt ist aus Entschäumern auf der Basis von Silikon, Fettalkoholen, Estern, Polypropylenglykol.

3. Verwendung nach Anspruch 1 oder 2, wobei das Acrylpolymer eine Kette mit einer Polycarboxylfunktion umfasst, optional mit Salz versetzt, an die eine weitere Gruppe, wie beispielsweise vom Typ Polycarboxylat oder Polyoxyethylen, angelagert ist.

4. Verwendung nach einem der Ansprüche 1 bis 3, wobei das Antischaummittel ein Polysiloxan/Alkoxylat ist und das Superplastifizierungsmittel ein sulfoniertes Polymelamin oder ein Polycarboxylatpolyether ist.

5. Verwendung nach einem der Ansprüche 1 bis 4, wobei das Antischaummittel in einer Menge vorhanden ist, die zwischen 0,01 bis 0,5 % liegt, berechnet in Bezug auf das Gewicht des Bindemittels, und/oder das Fließ-/Dispergier-/Plastifizierungs- /Superplastifizierungsmittel (ausgedrückt als Trockenextrakt) in einer Menge vorhanden ist, die zwischen von 0,02 und 1 % liegt, bezogen auf das Gewicht des Bindemittels.

6. Verwendung nach einem der Ansprüche 1 bis 5, wobei das Gewichtsverhältnis Entschäumer : Fließ-/Dispergier-/Plastifizierungs- /Superplastifizierungsmittel zwischen 0,005 und 200, vorzugsweise 0,05 bis 20, liegt.

7. Verwendung nach einem der Ansprüche 1 bis 6, wobei das Antischaummittel und das Fließ-/Dispergier-/Plastifizierungs-/Superplastifizierungsmittel in einem wasserlöslichen Beutel zu dem Mörtel hinzugefügt werden.

8. Fußbodenheizung, umfassend einen Estrich, der eine Wärmeleitfähigkeit von mindestens 2,0, vorzugsweise mindestens 2,2, vorteilhafterweise mindestens 2,5 W/m.K aufweist, erlangt durch Aushärten einer Estrichpaste, umfassend:
- eine Zusammensetzung für Estrichmörtel, umfassend:
- ein hydraulisches Bindemittel auf Basis von Calciumsulfat, vorzugsweise Anhydrit;
- Granulate;
- ein Antischaummittel in einer Menge, die zwischen 0,01 % und 2 %, vorzugsweise 0,01 und 0,5 % liegt, berechnet **In** Bezug auf das Gewicht des Bindemittels;
- Fließ-/Dispergier-/Plastifizierungs-/Superplastifizierungsmittel, ausgedrückt als Trockenextrakt, ist in einer Menge vorhanden, die zwischen 0,01 und 2 %, vorzugsweise zwischen 0,02 und 1 %, liegt, bezogen auf das Gewicht des Bindemittels;
- Wasser in einer solchen Menge, dass das Verhältnis Wasser/Bindemittel zwischen 0,27 und 0,70, vorzugsweise zwischen 0,35 und 0,55, vorteilhafterweise zwischen 0,35 und 0,45 liegt,
wobei das Antischaummittel ausgewählt ist aus Entschäumern auf der Basis von Silikon, Fettalkoholen, Estern, Polypropylenglykol, Copolymeren aus Polyethylenglykol und Polypropylenglykol, Alkylpolyacrylat, und wobei das Fließ-/Dispergier-/Plastifizierungs-/Superplastifizierungsmittel ausgewählt ist aus der Gruppe der Verbindungen, die durch Kondensation von Formaldehyd und sulfoniertem Naphthalin oder durch Kondensation von Formaldehyd und sulfonierten Melaminen erlangt werden, oder auf Basis von Acrylcopolymeren.

9. Fußbodenheizung nach Anspruch 8, wobei das Antischaummittel ausgewählt ist aus Entschäumern auf der Basis von Silikon, Fettalkoholen, Estern, Polypropylenglykol.

10. Fußbodenheizung nach Anspruch 8 oder 9, wobei das Acrylpolymer eine Kette mit einer Polycarboxylfunktion umfasst, optional mit Salz versetzt, an die eine weitere Gruppe, wie beispielsweise vom Typ Polycarboxylat oder Polyoxyethylen, angelagert ist.

11. Fußbodenheizung nach einem der Ansprüche 8 bis 10, wobei das Antischaummittel ein Polysiloxan/Alkoxylat ist und das Superplastifizierungsmittel ein sulfoniertes Polymelamin oder ein Polycarboxylatpolyether ist.

12. Fußbodenheizung nach einem der Ansprüche 8 bis 11, wobei das Gewichtsverhältnis Antischaummittel:Fließ-/Dispergier-/Plastifizier- /Superplastifiziermittel zwischen 0,005 und 200, vorzugsweise 0,05 bis 20, liegt.

13. Fußbodenheizung nach einem der Ansprüche 8 bis 12, wobei die Paste eine Ausbreitung von mindestens 22 cm, vorzugsweise mindestens 24 cm, vorteilhafterweise mindestens 25 cm aufweist.

14. Fußbodenheizung nach einem der Ansprüche 8 bis 13, wobei das Granulat ein Granulat von kalk- oder silikatartiger Natur ist.

15. Additiv für Estrichmörtel, umfassend, in einem wasserlöslichen Beutel, ein Antischaummittel, das ein Polysiloxan/Alkoxylat ist, und ein Superplastifizierungsmittel, das ein sulfoniertes Polymelamin oder ein Polyetherpolycarboxylat ist, wobei das Gewichtsverhältnis Antischaummittel:Superplastifizierungsmittel zwischen 0,005 und 200 liegt.

## Claims

1. A use of an anti-foaming agent and a fluidizing/dispersing/plasticizing/super plasticizing agent in combination with said anti-foaming agent to increase the thermal conductivity of screeds containing a calcium sulfate-based hydraulic binder,
wherein the anti-foaming agent is selected from anti foaming agents based on silicone, fatty alcohols, esters, polypropylene glycol, polyethylene glycol and polypropylene glycol copolymers, alkyl polyacrylate, and wherein said fluidizing/dispersing/plasticizing/super plasticizing agent is selected from the group of compounds obtained by condensation of formaldehyde and naphthalene sulfonate or by condensation of formaldehyde and sulfonated melamines, or based on acrylic copolymer,
and wherein the anti-foaming agent is present in an amount comprised between 0.01% and 2%, calculated relative to the weight of the binder and the fluidizing/dispersing/plasticizing/super plasticizing agent, expressed as dry extract, is present in an amount comprised between 0.01 and 2% relative to the weight of binder.

2. The use according to claim 1 wherein the anti-foaming agent is selected from anti-foaming agents based on silicone, fatty alcohols, esters, or polypropylene glycol.

3. The use according to claim 1 or 2, wherein said acrylic polymer comprises a chain with a polycarboxylic function, optionally salified, to which another group, such as a polycarboxylate or polyoxyethylene type, is attached.

4. The use according to any one of claims 1 to 3, wherein said anti-foaming agent is a polysiloxane/alkoxylate and the super plasticizing agent is a sulfonated polymelamine or a polycarboxylate polyether.

5. The use according to any one of claims 1 to 4, wherein the anti-foaming agent is present in an amount comprised between 0.01 and 0.5%, calculated relative to the weight of the binder and/or the fluidizing/dispersing/plasticizing/super plasticizing agent (expressed as dry extract) is present in an amount comprised between 0.02 and 1%, relative to the weight of binder.

6. The use according to any one of claims 1 to 5, wherein the weight ratio anti-foaming agent: fluidizing/dispersing/plasticizing/super plasticizing agent is comprised between 0.005 and 200, preferably 0.05 to 20.

7. The use according to any one of claims 1 to 6, wherein said anti-foaming agent and the fluidizing/dispersing/plasticizing/super plasticizing agent are added to the mortar in a water-soluble sachet.

8. An underfloor heating comprising a screed having a thermal conductivity of at least 2.0, preferably at least 2.2, advantageously at least 2.5 W/mK, obtained by hardening a screed paste comprising:
- a screed mortar composition comprising:
- a calcium sulfate-based hydraulic binder, preferably anhydrite;
- aggregates;
- an anti-foaming agent, in an amount comprised between 0.01% and 2%, preferably 0.01 and 0.5%, calculated relative to the weight of the binder;
- a fluidizing/dispersing/plasticizing/super plasticizing agent, expressed as dry extract, is present in an amount comprised between 0.01 and 2%, preferably between 0.02 and 1%, relative to the weight of binder;
- water, in such an amount that the water/binder ratio is comprised between 0.27 and 0.70, preferably between 0.35 and 0.55, advantageously between 0.35 and 0.45,
wherein the anti-foaming agent is selected from anti-foaming agents based on silicone, fatty alcohols, esters, polypropylene glycol, polyethylene glycol and polypropylene glycol copolymers, alkyl polyacrylate, and wherein said fluidizing/dispersing/plasticizing/super plasticizing agent is selected from the group of compounds obtained by condensation of formaldehyde and naphthalene sulfonate or by condensation of formaldehyde and sulfonated melamines or based on acrylic copolymer.

9. The underfloor heating according to claim 8, wherein the anti-foaming agent is selected from anti-foaming agents based on silicone, fatty alcohols, esters, polypropylene glycol.

10. The underfloor heating according to claim 8 or 9, wherein said acrylic polymer comprises a chain with a polycarboxylic function, optionally salified, to which another group, such as polycarboxylate or polyoxyethylene type, is attached.

11. The underfloor heating according to any one of claims 8 to 10, wherein said anti-foaming agent is a polysiloxane/alkoxylate and the super plasticizing agent is a sulfonated polymelamine or a polycarboxylate polyether.

12. The underfloor heating according to any one of claims 8 to 11, wherein the weight ratio anti-foaming agent: fluidizing/dispersing/plasticizing/super plasticizing agent is comprised between 0.005 and 200, preferably 0.05 to 20.

13. The underfloor heating according to any one of claims 8 to 12, wherein the paste presents a spread of at least 22cm, preferably at least 24cm, advantageously at least 25cm.

14. The underfloor heating according to any one of claims 8 to 13, wherein the aggregates are limestone or silico-limestone aggregates.

15. An additive for screed mortar comprising, in a water-soluble sachet, an anti- foaming agent which is a polysiloxane/alkoxylate and a super plasticizing agent which is a sulfonated polymelamine or a polycarboxylate polyether, wherein the weight ratio anti-foaming agent: super plasticizing agent is comprised between 0.005 and 200.
